# EUROPÄISCHE PATENTSCHRIFT

(11) **EP 1 840 421 B1**
(45) Veröffentlichungstag und Bekanntmachung des Hinweises auf die Patenterteilung: **21.10.2009**
(21) Anmeldenummer: 06006690.9
(22) Anmeldetag: 30.03.2006
(51) Int. Cl.: F16J 15/06

(54) **Vorrichtung zur Abdichtung**
Sealing device
Dispositif d'étanchéité

(43) Veröffentlichungstag der Anmeldung: 03.10.2007
(73) Patentinhaber: SIEMENS AKTIENGESELLSCHAFT, 80333 München (DE)
(72) Erfinder: Fremuth, Erwin, 90613 Grosshabersdorf (DE); Papenberg, Gerhard, 90766 Fürth (DE)

(56) Entgegenhaltungen:
- DE-C- 10 161 104
- US-B1- 6 254 105

## Beschreibung

Die Erfindung betrifft eine Vorrichtung, welche ein Einbaugehäuse, eine Gerätefrontplatte und eine dazwischen angeordnete Flachdichtung aufweist.

Beim frontseitigen Einbau von Komponenten oder Frontplatten an einem Gehäuse einer Vorrichtung/eines Geräts ist eine Erzielung einer gleichmäßigen und hohen Dichtigkeit wünschenswert. Viele Geräte werden wegen der damit verbundenen ,Schutzart (z.B. IP66k od. IP66, IP: international Protection ; US-B1-6254105) , beispielsweise für einen Einbau in Fronttafeln oder in Steuerpulte mit Flachdichtungen vorgesehen. Zur Erlangung einer über die gesamte Dichtung gleichmäßigen Anpresskraft ist bisher die Verwendung eines Drehmomentschlüssels erforderlich. Dabei wird z.B. ein Gerät mit Frontplatte in eine Gehäuseöffnung montiert und die Schrauben der Befestigungselemente mit dem Drehmomentschlüssel angezogen. Nachteilig ist hierbei jedoch, dass mit zunehmender Dichtungsbreite auch der zur Erzielung der Dichtwirkung erforderliche Anpressdruck zunimmt, was leicht zum Verzug der einzubauenden Frontplatte bzw. des Gehäuses führen kann. Außerdem besteht die Gefahr, dass ein feiner Spalt zwischen der Frontplatte und dem Gehäuse entstehen kann, d.h. dass Schmutz und Flüssigkeiten durch die sogenannte Kapillarwirkung eindringen können und selbst bei Reinigungsvorgängen mit Reinigungsmitteln oder Hochdruckreinigern nicht zu entfernen sind. Deswegen kann die erforderliche Dichtwirkdung durch eine breit dimensionierte Dichtfläche nicht gewährleistet werden. Bei Touchpanels/Touchscreens ist dies besonders problematisch, weil Fehlfunktionen auftreten können. Zweitens steigen der Platzbedarf und die Dicke der Frontplatte bzw. des Gehäuses, was sich negativ auf die Herstellungskosten der Geräte auswirken kann.

Der Erfindung liegt die Aufgabe zugrunde, eine zuverlässige Abdichtung einer Vorrichtung, welche ein Einbaugehäuse aufweist, zu ermöglichen.

Diese Aufgabe wird erfindungsgemäß durch eine Vorrichtung mit den Merkmalen des Patentanspruchs 1 gelöst. Weitere vorteilhafte Ausbildungen der Erfindung sind in den Unteransprüchen angegeben.

Der Erfindung liegt die Idee zugrunde, den für die Befestigung einer Gerätefrontplatte notwendigen Druck möglichst gleichmäßig mehr auf dem Einbaugehäuse einer Vorrichtung anzulegen, um die Kompression auf eine Flachdichtung beim Befestigen zu begrenzen. Erfindungsgemäß wird eine Vorrichtung, insbesondere ein Bedien- und Beobachtungsgerät, zum Einbau in Schaltschränke und/oder in Steuerpulte angegeben, welche zur Ansteuerung einer Betriebsanlage vorgesehen und in einer nassen Umgebung eingesetzt werden. Die Vorrichtung fasst ein Einbaugehäuse, eine Gerätefrontplatte und zumindest eine Flachdichtung um, wobei das Einbaugehäuse durch die Gerätefrontplatte zumindest teilweise abgedeckt und die Flachdichtung zwischen dem Einbaugehäuse und der Grätefrontplatte angeordnet werden können. Zur Abdichtung wird ein Druck auf die Flachdichtung durch die Befestigung der Gerätefrontplatte am Einbaugehäuse ausgeübt. Dazu wird zumindest ein Vorsprung in Richtung der Gerätefrontplatte auf dem Einbaugehäuse vorgesehen, wobei der Vorsprung beispielsweise plattenförmig ist. Bei der Anordnung der Flachdichtung wird die Gerätefrontplatte in direktem Kontakt mit dem Vorsprung auf das Einbaugehäuse befestigt, wobei die Flachdichtung nicht an der Stelle des Vorsprungs angeordnet wird, nämlich nicht auf dem Vorsprung, sondern seitlich in unmittelbarer Nähe des Vorsprungs auf das Einbaugehäuse aufgelegt. In der Regel besteht die Flachdichtung beispielsweise aus einem verformbaren Material, z.B. Gummi, Kunststoff. Dementsprechend wird die Höhe des Vorsprungs kleiner als die Dicke der Flachdichtung ausgestaltet. Die Gerätefrontplatte wird beim Anpressen auf das Einbaugehäuse gegen einen durch den Vorsprung definierten Anschlag gepresst, damit die Kompression auf die Flachdichtung begrenzt werden kann, weil der durch die Befestigung der Gerätefrontplatte veranlasste Druck wesentlich auf den Vorsprung ausgeübt wird. Dadurch kann die Abdichtung durch die auf die Flachdichtung bzw. die Gerätefrontplatte wirkende Anpressung erfolgen. Zudem kann eine Bildung eines ungewünschten Spalts zwischen der Gerätefrontplatte und der Flachdichtung ausgeschlossen werden, da ein seitliches Wegrutschen der Flachdichtung verhindert wird. Außerdem wird ein gleichmäßiger Anpressdruck auf die Flachdichtung ermöglicht, d.h. die Abdichtung wird nicht nur am Vorsprung, sondern überall unter der gesamten Gerätefrontplatte zuverlässig gewährleistet. Dadurch können die Gerätefrontplatte und die Flachdichtung langzeitstabil gegen Verzug gesichert, und somit eine gleichmäßige und hohe Dichtigkeit für die Vorrichtung erzielt werden. Die Gefahr von undichten Stellen wird hierdurch deutlich reduziert. Darüber hinaus kann ein herkömmlicher Schlüssel (z.B. Imbus-Schlüssel oder Sechskant) statt eines teueren Drehmomentschlüssels verwendet werden, weil das Einbaugehäuse und die Flachdichtung durch die Befestigung der Gerätefrontplatte nicht so anfällig für Verzug oder Verformung sind, und durch den Vorsprung ein definierter Anschlag gegeben ist.

Vorteilhafterweise werden die Abmessung und/oder die Form der Flachdichtung derart vorgesehen, dass die Flachdichtung nahtlos neben dem Vorsprung anzuordnen ist. Die Flachdichtung sollte dem den Vorsprung aufweisenden Einbaugehäuse anpassend ausgestaltet werden, damit die Flachdichtung seitlich in unmittelbarer Nähe des Vorsprungs auf dem Einbaugehäuse aufgelegt werden kann. Dazu sollen die Forme und die Abmessungen der Flachdichtungen ebenfalls miteinander angepasst werden, falls mehr als zwei Flachdichtungen bei dieser Vorrichtung gebraucht werden.

Gemäß einer alternativen Ausgestaltung der Erfindung kann die Flachdichtung zur Aufnahme des Vorsprungs eine Aussparung an der Stelle des Vorsprungs aufweisen. Damit kann lediglich ein einzelnes Stück von Flachdichtung verwendet werden, auch wenn das Einbaugehäuse eine Mehrzahl von Vorsprüngen oder eine komplizierte Form aufweist.

Gemäß einer vorteilhaften Ausgestaltung der Erfindung werden die Abmessung und/oder die Form der Aussparung der Flachdichtung derart vorgesehen, dass die Aussparung den Vorsprung nahtlos aufnimmt. Dadurch kann eine Bildung eines ungewünschten Spalts seitlich zwischen der Flachdichtung und dem Vorsprung ausgeschlossen werden.

Gemäß einer weiteren vorteilhaften Ausgestaltung der Erfindung werden die Gerätefrontplatte, die Flachdichtung und ein Teil des Einbaugehäuses rahmenförmig gebildet, wobei die Größen der Aussparungen der drei gebildeten Rahmen gleich sind. Dadurch können die im Gehäuse eingebauten Bauelemente mit anderen Elementen von außen verbunden werden, oder es kann mittels des Rahmens ein anderes Gerät, z.B. Touchscreen oder Display, auf dem Einbaugehäuse eingebaut werden.

Gemäß einer anderen vorteilhaften Ausgestaltung der Erfindung wird die Gerätefrontplatte mittels zumindest eines Befestigungsmittels (z.B. Schrauben, Anschlussniete) auf dem Einbaugehäuse derart befestigt, dass das Befestigungsmittel im Bereich des Vorsprungs angeordnet wird. Das Befestigungsmittel kann solange angezogen werden, bis ein spürbarer Widerstand erkennbar ist. Da an der Stelle des Vorsprungs das Gehäuse von hoher Festigkeit ist, kann es mehr Gegendruck erzeugen und nicht so leicht verzogen oder verformt werden.

Häufig wird ein Gerät, z.B. HMI-Gerät, Anzeige oder Funktionspanel, zur Ansteuerung einer Betriebsanlage verwendet, zu diesem Zweck wird die Vorrichtung zur Befestigung eines derartigen Geräts ausgestaltet und zur Halterung des Geräts gebraucht.

Vorteilhafterweise wird diese Vorrichtung mit dem auf ihr aufgebauten Gerät zum Einsatz im Umfeld der Nahrungs- und Genussmittelindustrie (NuG-Industrie) vorgesehen. In der Nahrungs- und Genussmittelindustrie (NuG-Industrie) wird ein zunehmender Wert auf die Beachtung von Hygienevorschriften gelegt, wobei oft Reinigungsmittel (Wasser, Säuren oder Laugen) mit hohem Druck aufgebracht werden, so dass die Vorrichtung in nasser Umgebung betrieben werden muss. Die oben geschilderte Vorrichtung ist besonders für diese Anwendung geeignet.

Zu einem besseren Einbau von Komponenten der Betriebsanlage oder von HMI-Geräten wird die Gerätefrontplatte und/oder das Gehäuse aus Metall ausgestaltet.

Nachfolgend wird die Erfindung anhand der in den Figuren dargestellten Ausführungsbeispiele näher beschrieben und erläutert. Es zeigen:
- FIG 1: eine Seitenansicht einer herkömmlichen Vorrichtung zur Abdichtung,
- FIG 2: ein Spalt bei einer herkömmlichen Vorrichtung zur Abdichtung,
- FIG 3: eine Seitenansicht einer erfindungsgemäßen Vorrichtung zur Abdichtung, und
- FIG 4: Abdichtung durch eine erfindungsgemäßen Vorrichtung.

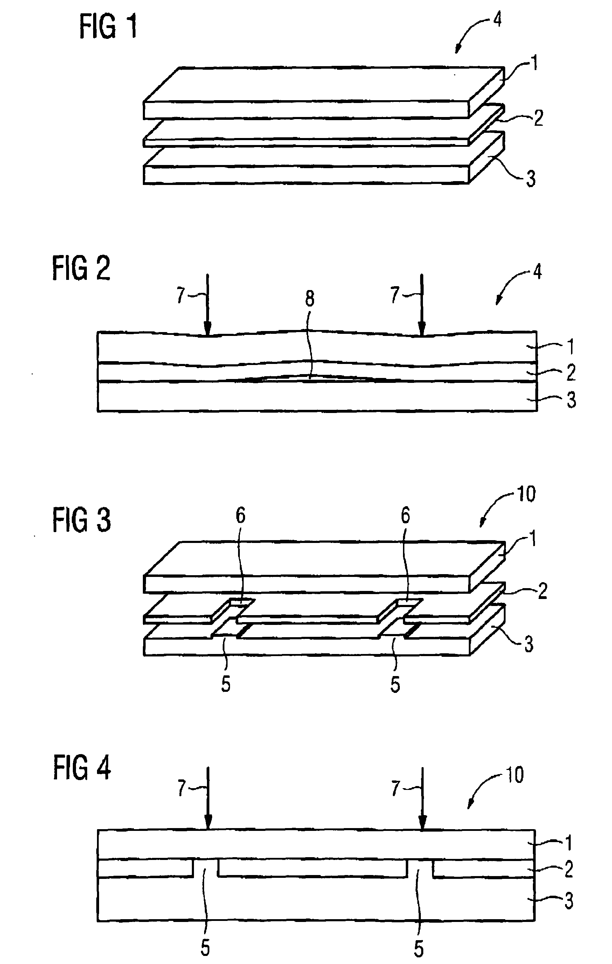

Gemäß FIG 1 wird eine herkömmliche Vorrichtung 4, welche ein plattenförmiges Einbaugehäuse 3, eine Gerätefrontplatte 1 und eine Flachdichtung 2 aufweist, dargestellt, wobei das Gehäuse 3 zum Teil von der Gerätefrontplatte 1 abgedeckt wird. Diese Vorrichtung wird in einer Betriebsanlage (z.B. Schaltschränke oder Steuerpulte) eingesetzt. Zur Abdichtung der Betriebsanlage wird die Flachdichtung 2 zwischen der Gerätefrontplatte 1 und dem Einbaugehäuse 3 angeordnet und mit der Gerätefrontplatte 1 zusammen auf dem Einbaugehäuse 3 aufgelegt und befestigt. Eine solche Gerätefrontplatte 1 wird im Regelfall aus einem geeigneten Metall hergestellt, während die Flachdichtung 2 z.B. aus Gummi besteht. Ein Anpressdruck, der zur Befestigung der Gerätefrontplatte 1 mittels zwei Schrauben 7 veranlasst wird, wird auf die Flachdichtung 2 ausgeübt. Bei dieser Befestigung muss der Druck relativ groß sein, um eine bessere Dichtung zu erreichen. Das kann leicht zum Verzug der Gerätefrontplatte 1 oder des Einbaugehäuses 3 bzw. der Flachdichtung 2 führen. Daher wird üblicherweise ein teuerer Drehmomentschlüssel gebraucht. Zudem, wie in FIG 2 gezeigt, besteht die Gefahr, dass die Gerätefrontplatte 1 und die Flachdichtung 2 sich wegen des ungleichmäßigen Anpressdrucks nach längerer zeit verformen und Spalte 8 folglich zwischen der Flachdichtung 2 und dem Einbaugehäuse 3 entstehen können, denn der durch das Eindrehen der Schrauben 7 veranlasste Druck wird auf die Gerätefrontplatte 1, die Flachdichtung 2 bzw. das Gehäuse 3 ungleichmäßig ausgeübt und verteilt. Wegen dieser ungleichmäßigen Dichtwirkung können Schmutz und Flüssigkeiten durch die feinen Spalte 8 eindringen und bei Reinigungsvorgängen mit Reinigungsmitteln oder Hochdruckreinigern nicht mehr entfernt werden.

In FIG 3 wird eine Vorrichtung 10 illustriert, die eine ähnliche Konstruktion wie die in FIG 1 dargestellte Vorrichtung 4 aufweist. Hierbei ist es kennzeichnend, dass zur Befestigung der Gerätefrontplatte 1 das Einbaugehäuse 3 eine Anzahl von Vorsprüngen 5, die plattenförmig und gleich hoch sind, aufweist. Um die Vorsprünge 5 aufnehmen zu können, besitzt die Flachdichtung 2 an der Stelle der Vorsprünge 5 jeweils eine Aussparung 6. Dabei werden die Dicke der Flachdichtung 2 gleich wie die Höhe der Vorsprünge 5 und die Abmessung der Flachdichtung 2 zur nahtlosen Aufnahme der Vorsprünge 5 je nach der Größe der Vorsprünge 5 entsprechend ausgestaltet.

Diese Vorrichtung 10 wird weiterhin in FIG 4 dargestellt, wobei die Gerätefrontplatte 1 auf dem Einbaugehäuse 3 befestigt wird, indem durch Schrauben 7 Druck auf die Gerätefrontplatte 1 in Höhe der Vorsprünge 5 aufgebracht wird. Der Druck durch die Schrauben 7 wird solange erhöht, bis ein spürbarer Widerstand erkennbar ist. Der durch diese Befestigung veranlasste Druck wird im Wesentlich nur auf die Vorsprünge ausgeübt. Dadurch kann ein gleichmäßiger Anpressdruck mittels der Gerätefrontplatte 1 auf die Flachdichtung 2 ermöglicht werden. Die gesamte Vorrichtung 10 kann deswegen langzeitstabil gegen Verzug eingebaut werden. Auch eine Bildung eines ungewünschten Spalts 8 kann ebenfalls ausgeschlossen werden. Dadurch wird ein Eindringen von Chemikalien oder Flüssigkeiten in die Vorrichtung 10 oder die Betriebsanlage sicher verhindert.

Durch eine derartige Vorrichtung 10 ist das Erreichen hoher Schutzarten (z,B. IP66K, IP69K) und eines den Anforderungen des Hygienic-Design entsprechenden Dichtkonzepts problemlos möglich. Die durch die Vorrichtung 10 ausgestatte Betriebsanlage kann gegen die Umgebung (Flüssigkeiten, Schmutz und Keime usw.), insbesondere in der Nahrungs- und Genussmittelindustrie (NuG-Industrie), gewährleistet werden. Außerdem ist die Gerätefrontplatte 1 als ein plattenförmiger Frontrahmen für den Einbau von HMI-Geräten (HMI: Human-Maschine-Interface) geeignet. Dabei können solche Geräte Bediengeräten bis hin zu Monitoren mit Touchfunktion sein.

## Patentansprüche

1. Bedien- und Beobachtungsvorrichtung (10) zum Einbau in Schaltschränke und/oder in Steuerpulte,wobei die Vorrichtung aufweist:
- ein Einbaugehäuse (3),
- eine Gerätefrontplatte (1) und
- zumindest eine zwischen dem Einbaugehäuse (3) und der Gerätefrontplatte (1) angeordnete Flachdichtung (2)
**dadurch gekennzeichnet, dass** das Einbaugehäuse (3) eine Mehrzahl von plattenförmigen und gleich hohen Vorsprüngen (5) in Richtung der Gerätefrontplatte (1) aufweist,
wobei die Gerätefrontplatte (1) in direktem Kontakt mit den Vorsprüngen (5) steht und an dem Einbaugehaüse befestigt ist und
wobei die Höhe der Vorsprünge (5) kleiner oder gleich der Dicke der Flachdichtung (2) ist, wodurch die Gerätefrontplatte (1) beim Befestigen auf das Einbaugehäuse (3) gegen durch die Vorsprünge (5) definierte Anschläge pressbar ist, und wobei die Flachdichtung an derstelle der Vorsprünge jeweils eine Ausparung aufweist, so dass der Druck im Wesentlichere auf die Vorsprünge (5) ausgeübt ist.

2. Vorrichtung (10) nach Anspruch 1, **dadurch gekennzeichnet , dass** die Abmessung und/oder die Form der Flachdichtung (2) derart vorgesehen sind, dass die Flachdichtung nahtlos neben dem Vorsprung (5) anordenbar ist.

3. Vorrichtung (10) nach der Anspruch 1 oder 2, **dadurch gekennzeichnet , dass** die Flachdichtung (2) an der Stelle des Vorsprungs (5) eine Aussparung (6) aufweist.

4. Vorrichtung (10) nach der Anspruch 1, **dadurch gekennzeichnet , dass** die Abmessung und/oder die Form der Aussparung (6) der Flachdichtung (2) derart vorgesehen sind, dass die Aussparung (6) den Vorsprung (5) nahtlos aufnimmt.

5. Vorrichtung (10) nach einem der Ansprüche 1 oder 4, **dadurch gekennzeichnet , dass** das Gerätefrontplatte (1), die Flachdichtung (2) und ein Teil des Einbaugehäuses (3) rahmenförmig gebildet sind, wobei die Größen der Aussparungen der gebildeten Rahmen gleich sind.

6. Vorrichtung (10) nach einem der vorherigen Ansprüche,
**dadurch gekennzeichnet , dass** die Gerätefrontplatte (1) mittels zumindest eines Befestigungsmittels (7) auf dem Einbaugehäuse (3) derart befestigbar ist, dass das Befestigungsmittels im Bereich des Vorsprungs (5) angeordnet ist.

7. Vorrichtung (10) nach einem der vorherigen Ansprüche,
**dadurch gekennzeichnet , dass** die Vorrichtung (10) zur Befestigung eines Gerätes, insbesondere eines HMI-Gerätes, einer Anzeige, oder eines Funktionspanels der Vorrichtung (10), ausgestaltet ist.

8. Vorrichtung (10) nach einem der vorherigen Ansprüche,
**dadurch gekennzeichnet , dass** die Vorrichtung (10) mit den befestigten Geräten zum Einsatz im Umfeld der Nahrungs- und Genussmittelindustrie (NuG-Industrie) vorgesehen ist.

9. Vorrichtung (10) nach einem der vorherigen Ansprüche,
**dadurch gekennzeichnet , dass** die Gerätefrontplatte (1) und/oder das Einbaugehäuse (3) aus Metall ausgestaltet sind.

## Claims

1. Operating and monitoring apparatus (10) for installation in switchgear cabinets and/or in control consoles, the apparatus having:
- an installation housing (3),
- a device front panel (1) and
- at least one flat gasket (2) arranged between the installation housing (3) and the device front panel (1), **characterised in that** the installation housing (3) has a plurality of panel-shaped and equal-height projections (5) in the direction of the device front panel (1),
the device front panel (1) being in direct contact with the projections (5) and being attached to the installation housing and the height of the projections (5) being less than or equal to the thickness of the flat gasket (2), as a result of which the device front panel (1) can be pressed against stops defined by the projections (5) when being attached to the installation housing (3), and the flat gasket having in each case a recess instead of the projections, so that the pressure is essentially exerted on the projections (5).

2. Apparatus (10) according to claim 1, **characterised in that** the dimension and/or the shape of the flat gasket (2) is such that the flat gasket can be arranged seamlessly next to the projection (5).

3. Apparatus (10) according to claim 1 or 2, **characterised in that** the flat gasket (2) has a recess (6) instead of the projection (5).

4. Apparatus (10) according to claim 1, **characterised in that** the dimension and/or shape of the recess (6) of the flat gasket (2) is such that the recess (6) seamlessly receives the projection (5).

5. Apparatus (10) according to one of claims 1 or 4, **characterised in that** the device front panel (1), the flat gasket (2) and a part of the installation housing (3) are frame-shaped, the sizes of the recesses of the frames formed being equal.

6. Apparatus (10) according to one of the preceding claims, **characterised in that** the device front panel (1) can be attached to the installation housing (3) by means of at least one attachment means (7) such that the attachment means is arranged in the area of the projection (5).

7. Apparatus (10) according to one of the preceding claims, **characterised in that** the apparatus (10) is designed for attaching a device, in particular an HMI device, a display, or a function panel of the apparatus (10).

8. Apparatus (10) according to one of the preceding claims, **characterised in that** the apparatus (10) is provided with the attached devices for use in the environment of the food, drink and tobacco industry.

9. Apparatus (10) according to one of the preceding claims, **characterised in that** the device front panel (1) and/or the installation housing (3) are formed of metal.

## Revendications

1. Dispositif ( 1 ) de service et d'observation à monter dans une armoire électrique et/ou dans un pupitre de commande, le dispositif comprenant :
- un boîtier ( 3 ) encastré
- une plaque ( 1 ) avant d'appareil et
- au moins un joint ( 2 ) plat interposé entre le boîtier ( 3 ) encastré et la plaque ( 1 ) avant d'appareil,
**caractérisé en ce que** le boîtier ( 3 ) encastré a une pluralité de saillies ( 5 ) en forme de plaque et de même hauteur en direction de la plaque ( 1 ) avant d'appareil,
dans lequel la plaque ( 1 ) avant d'appareil est en contact direct avec les saillies ( 5 ) et est fixée au boîtier encastré et
dans lequel la hauteur des saillies ( 5 ) est inférieure ou égale à l'épaisseur du joint ( 2 ) plat, de sorte que la plaque ( 1 ) avant d'appareil peut être, lors de la fixation sur le boîtier ( 3 ) encastré, pressée sur des butées définies par les saillies ( 5 ), et dans lequel le joint plat a, à l'endroit des saillies, respectivement un évidement, de sorte que la pression est exercée essentiellement sur les saillies ( 5 ).

2. Dispositif ( 10 ) suivant la revendication 1, **caractérisé en ce que** la dimension et/ou la forme du joint ( 2 ) plat sont telles que le joint plat peut être disposé sans solution de continuité à côté de la saillie ( 5 ).

3. Dispositif ( 10 ) suivant la revendication 1 ou 2, **caractérisé en ce que** le joint ( 2 ) plat a un évidement ( 6 ) à l'emplacement de la saillie ( 5 ).

4. Dispositif ( 10 ) suivant la revendication 1, **caractérisé en ce que** la dimension et/ou la forme d'évidement ( 6 ) du joint ( 2 ) plat sont telles que l'évidement ( 6 ) reçoit la saillie ( 5 ) sans solution de continuité.

5. Dispositif ( 10 ) suivant l'une des revendications 1 à 4, **caractérisé en ce que** la plaque ( 1 ) avant de l'appareil, le joint ( 2 ) plat et une partie du boîtier ( 3 ) encastré sont sous la forme de cadres, les dimensions des évidements des cadres formés étant les mêmes.

6. Dispositif ( 10 ) suivant l'une des revendications précédentes, **caractérisé en ce que** la plaque ( 1 ) avant de l'appareil peut être fixée au boîtier ( 3 ) encastré à l'aide d'au moins un moyen ( 7 ) de fixation de sorte que le moyen de fixation soit disposé dans la zone de la saillie ( 5 ).

7. Dispositif ( 10 ) suivant l'une des revendications précédentes, **caractérisé en ce que** le dispositif ( 10 ) est constitué pour la fixation d'un appareil, notamment d'un appareil HMI, d'un affichage ou d'un panneau fonctionnel du dispositif ( 10 ).

8. Dispositif ( 10 ) suivant l'une des revendications précédentes, **caractérisé en ce que** le dispositif ( 10 ) avec les appareils fixés est prévu pour être utilisé dans le domaine de l'industrie alimentaire et les produits de consommation de luxe.

9. Dispositif ( 10 ) suivant l'une des revendications précédentes, **caractérisé en ce que** la plaque ( 1 ) avant d'appareil et/ou le boîtier ( 3 ) encastré sont en métal.
